# FASCICULE DE BREVET EUROPEEN

(11) **EP 2 536 319 B1**
(45) Date de publication et mention de la délivrance du brevet: **07.05.2014**
(21) Numéro de dépôt: 11706867.6
(22) Date de dépôt: 24.01.2011
(51) Int. Cl.: A47J 31/54

(54) **CHAUDIÈRE RAPIDE ET APPAREIL ÉLECTROMÉNAGER COMPRENANT UNE TELLE CHAUDIÈRE**
SCHNELLKOCHER UND ELEKTRISCHES HAUSHALTSGERÄT MIT EINEM DERARTIGEN KOCHER
RAPID BOILER AND DOMESTIC ELECTRICAL APPLIANCE COMPRISING SUCH A BOILER

(30) Priorité: 15.02.2010 FR 1051009
(43) Date de publication de la demande: 26.12.2012
(73) Titulaire: SEB S.A., 69130 Ecully (FR)
(72) Inventeur: GUEGAN, Laurent, 74150 Lornay (FR)
(74) Mandataire: Bourrières, Patrice
(86) Numéro de dépôt international: PCT/FR2011/050133
(87) Numéro de publication internationale: WO 2011/098699

(56) Documents cités:
- EP-A1- 1 764 014
- EP-A1- 1 774 884
- EP-A2- 0 903 098
- WO-A1-02/30250
- WO-A2-2009/043851
- FR-A1- 2 778 729
- GB-A- 2 062 823

## Description

La présente invention se rapporte au domaine technique général des appareils électroménagers comprenant une chaudière prévue pour la production d'eau chaude.

La présente invention concerne plus particulièrement les appareils électroménagers de préparation de boissons comportant une telle chaudière.

Il est connu du document EP1076503 de réaliser une chaudière de type bouilleur pour appareil électroménager comprenant une chambre d'ébullition munie d'un fond recevant un élément chauffant. La chambre d'ébullition comporte un tube d'admission d'eau présentant une entrée reliée à un réservoir d'eau par l'intermédiaire d'un conduit comportant un clapet anti-retour. La chambre d'ébullition comporte un tube ascendant d'évacuation de l'eau chauffée comprenant une partie inférieure dont l'extrémité est disposée à proximité du fond de la chambre d'ébullition et une partie supérieure émergeant hors de la chambre. Le tube d'évacuation est vertical et présente, dans la chambre d'ébullition, une ouverture à proximité du plafond de ladite chambre. Une telle chaudière présente l'avantage d'être économique à réaliser car l'alimentation en eau de la chambre se fait par gravité depuis le réservoir et ne nécessite pas de pompe. Cependant, la surface du fond est limitée et ne permet pas d'avoir une surface d'échange importante avec l'eau pour installer un élément chauffant puissant. Ainsi, la mise en chauffe est lente faisant que le temps d'attente pour avoir un écoulement de l'eau chaude est long et la production d'eau chaude est faible. De plus, l'élément chauffant ayant une inertie thermique importante, lors de l'arrêt de la chauffe en cours de cycle, l'eau chaude continue de couler, pouvant provoquer un débordement du récipient recevant cette eau chaude.

Un but de la présente invention est de remédier aux inconvénients précités et de proposer, dans un appareil électroménager, une chaudière permettant de produire rapidement et en quantité importante de l'eau chaude.

Un autre but de la présente invention est de proposer, dans un appareil électroménager, une chaudière pour la production d'eau chaude qui présente une conception très simple et qui soit économique à mettre en oeuvre.

Un autre but de la présente invention est de proposer, dans un appareil électroménager, une chaudière pour la production d'eau chaude, fiable et qui fonctionne en toute sécurité.

Un autre but de l'invention est de proposer un appareil électroménager comportant une chaudière du type précité.

Ces buts sont atteints avec une chaudière pour appareil électroménager de préparation de boissons comportant une chambre d'ébullition alimentée en eau par gravité à partir d'un réservoir, la chambre comportant un fond, une paroi verticale et des moyens de chauffe, la surface de la paroi verticale étant supérieure à la surface du fond de la chambre et les moyens de chauffe étant formés par une résistance électrique sérigraphiée rapportée sur la paroi verticale.

Dans une telle chaudière, la surface d'échange entre les moyens de chauffe et l'eau est importante et permet d'obtenir une production rapide et importante d'eau chaude.

La résistance électrique sérigraphiée permet d'obtenir des moyens de chauffe de faible inertie thermique et ainsi, d'avoir une mise en chauffe très rapide de la chaudière. De plus, lors de l'arrêt de l'alimentation électrique de la résistance électrique sérigraphiée en cours de cycle, la production d'eau chaude s'arrête immédiatement. La dépose de la résistance électrique par sérigraphie permet de répartir uniformément la résistance sur la surface de la paroi verticale en évitant ainsi les points chauds.

On obtient une chambre d'ébullition verticale de forme allongée bien adaptée à produire des petites salves d'eau chaude. La production de petites salves permet de produire une succession de petites quantités d'eau chaude et ainsi d'avoir un écoulement proche d'un écoulement continu.

L'alimentation en eau par gravité de la chambre permet d'éviter l'utilisation de composants onéreux du type pompe et d'avoir une conception simple et économique. L'absence de composants électriques du type pompe ou électrovanne comportant des pièces en mouvement permet d'obtenir une chaudière très fiable.

Avantageusement, la chaudière comporte un clapet anti-retour sur l'alimentation en eau et la chambre d'ébullition comporte un plafond traversé par un tube ascendant d'évacuation de l'eau chauffée dont l'extrémité inférieure est disposée à proximité du fond de la chambre d'ébullition, le tube ascendant présentant une ouverture dans la chambre d'ébullition, à proximité du plafond de ladite chambre.

Cette disposition permet d'obtenir une chaudière alimentée par gravité en eau très économique.

De plus, l'agencement de la résistance électrique sérigraphiée rapportée sur la paroi verticale de la chambre permet lors du début de l'ébullition de produire de la vapeur sur la face interne de la paroi. La vapeur générée va alors pousser l'eau chaude vers le centre de la chambre, facilitant ainsi son expulsion par le tube ascendant.

Avantageusement, le tube ascendant est disposé au centre de la chambre.

De préférence, la chambre comporte une sortie d'évacuation de l'eau chauffée munie d'au moins un clapet anti retour.

Après l'expulsion de l'eau chauffée contenue dans la chambre par le tube ascendant, une dépression se crée dans la chambre. Le clapet anti retour sur la sortie de la chambre se ferme et le remplissage se fait de manière très rapide uniquement par le clapet anti retour de l'alimentation en eau. Ainsi, on peut enchaîner les cycles de production d'eau chaude sans couper l'alimentation des éléments chauffants lors du remplissage de la chaudière. Cette disposition permet d'éviter les problèmes normatifs liés aux cycles alimentation-coupure successifs.

Avantageusement, la résistance électrique sérigraphiée s'étend sur la paroi verticale entre un premier point bas et un deuxième point haut et la chambre comporte des moyens de limitation d'au moins dix pour-cent du volume contenu à l'intérieur de la paroi verticale entre un premier plan horizontal passant par le premier point bas et un deuxième plan horizontal passant par le deuxième point haut.

Cette disposition permet de diminuer le volume d'eau à chauffer en conservant une surface d'échange entre les moyens de chauffe et l'eau identique. Ainsi, la chaudière produit des petites salves d'eau qui s'enchaînent très rapidement et l'écoulement de l'eau chaude se rapproche d'un écoulement continu.

De préférence, la chambre comporte un bouchon inférieur et un bouchon supérieur, au moins un des bouchons étant muni d'une excroissance qui s'étend vers l'intérieur de la chambre. L'excroissance forme les moyens de limitation du volume.

Cette disposition permet de réaliser de manière très économique les moyens de limitation du volume.

Avantageusement, le bouchon inférieur est muni d'une excroissance de forme conique.

Cette disposition permet d'augmenter la température de l'eau produite par la chaudière.

La demanderesse a mis en évidence que, dans la chaudière, l'ensemble du volume d'eau ne s'élève pas en température à la même vitesse. Il existe une zone où l'eau ne subit peu ou pas de turbulence et qui n'est pas au contact de la paroi verticale. Cette zone de forme conique se situe au pied du tube ascendant et se poursuit le long de ce tube ascendant vers le haut. L'excroissance de forme conique du bouchon inférieur supprime cette zone d'eau moins chaude.

Avantageusement, la résistance électrique sérigraphiée s'étend sur la paroi verticale entre un premier point bas et un deuxième point haut et la chambre comporte des moyens d'augmentation d'au moins dix pour-cent du volume défini par la paroi verticale entre un premier plan horizontal passant par le premier point bas et un deuxième plan horizontal passant par le deuxième point haut.

Cette disposition permet d'optimiser la quantité de matière mise en oeuvre pour la résistance électrique sérigraphiée et la paroi verticale, telle qu'un matériau métallique inoxydable, en regard des moyens de chauffe.

De préférence, la chambre comporte un bouchon inférieur et un bouchon supérieur, au moins un des dits bouchons étant muni d'une excroissance qui s'étend vers l'extérieur de la chambre, ladite excroissance formant les moyens d'augmentation du volume.

Cette disposition permet de réaliser de manière très économique les moyens d'augmentation du volume de la chambre.

Avantageusement, la sortie est reliée à des moyens de séparation de l'eau contenue initialement avant ébullition dans le tube ascendant et de l'eau contenue dans la chambre.

En fonctionnement, l'eau contenue dans le tube ascendant chauffe moins vite que l'eau contenue entre la paroi verticale de la chambre et l'extérieur du tube ascendant. Ainsi, lors de l'expulsion, l'eau contenue dans le tube ascendant n'a pas atteint l'ébullition. En séparant ce volume d'eau du reste du volume d'eau porté à ébullition contenu dans la chambre, cette disposition permet donc de produire de l'eau chaude proche de la température d'ébullition.

De préférence, les moyens de séparation comportent un conduit sensiblement vertical raccordé à la sortie pour évacuer l'eau contenue dans la chambre et un conduit incliné reliant la sortie au réservoir pour évacuer l'eau contenue dans le tube ascendant.

Lors de l'expulsion de l'eau chaude de chambre, la pression générée par le début de l'ébullition pousse lentement l'eau contenue dans le tube ascendant qui s'écoule ensuite par gravité dans le conduit incliné vers le réservoir. Lorsque l'ébullition est atteinte, la pression dans la chambre est telle que l'eau est propulsée dans le tube ascendant à une vitesse suffisante pour passer dans le conduit d'évacuation vertical vers la sortie d'eau chaude. Ainsi, cette disposition permet de réaliser des moyens de séparation de l'eau contenue dans le tube ascendant, de l'eau contenue dans la chambre très simples et très économiques à mettre en oeuvre.

Avantageusement, la sortie est raccordée à une chambre de séparation de l'eau et de la vapeur.

Cette disposition permet d'obtenir un écoulement calme à la sortie de l'eau chaude en limitant les projections et permet d'obtenir une confirmation visuelle pour l'utilisateur par l'échappement de la vapeur par un conduit que l'eau a bien été portée à ébullition.

De préférence, la chambre de séparation comporte au moins partiellement une paroi interne et une paroi externe définissant un volume formant un conduit d'évacuation de vapeur.

Cette disposition permet d'exploiter la vapeur pour chauffer les parois de la chambre et ainsi permettre d'éviter de refroidir l'eau chaude sortant de la chaudière. Avantageusement, les matériaux choisis pour former la chambre de séparation présentent une inertie thermique faible, notamment un plastique d'épaisseur réduite.

Avantageusement, la sortie d'eau chaude est dimensionnée pour limiter le débit de l'écoulement de l'eau chaude, la chambre de séparation faisant également office de réservoir tampon.

Cette disposition permet d'obtenir un écoulement continu.

L'invention concerne également un appareil électroménager comportant une chaudière telle que précédemment décrite.

De préférence, l'appareil est un appareil de distribution d'eau chaude.

Cette disposition permet d'obtenir un appareil du type fontaine à eau chaude produisant rapidement et en grande quantité de l'eau chaude.

L'invention sera mieux comprise à l'étude des modes de réalisation pris à titre nullement limitatif et illustrés dans les figures annexées dans lesquelles :
- La figure 1 illustre une vue en perspective d'une chaudière selon un mode particulier de réalisation de l'invention.
- La figure 2 illustre une vue en coupe de la chaudière illustrée sur la figure 1.
- La figure 3 illustre une vue en développé à plat des moyens de chauffe de la chaudière illustrée sur la figure 1.
- La figure 4 illustre une vue en coupe de la chambre de la chaudière illustrée sur la figure 1 selon une variante de réalisation.
- La figure 5 illustre une vue en coupe de la chambre de la chaudière illustrée sur la figure 1 selon une variante de réalisation.

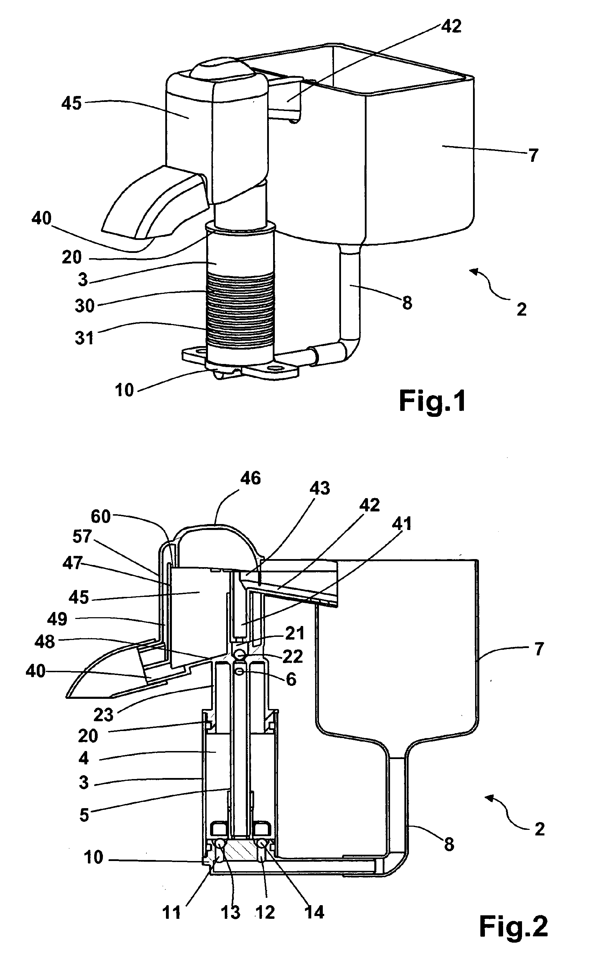

Dans l'exemple de réalisation représenté aux figures 1 et 2, une chaudière 2 comporte un corps 3 cylindrique formant une paroi verticale. Le corps 3 définit une chambre 4 d'ébullition et qui présente, à son extrémité inférieure, un bouchon inférieur 10 dans lequel deux entrées 11, 12 sont pratiquées pour l'introduction d'eau dans la chambre 4. Le corps 3 comporte des moyens de chauffe 30 comprenant une résistance électrique sérigraphiée 31 pour chauffer l'eau admise dans la chambre 4. Le corps 3 cylindrique présente, à son extrémité supérieure, un bouchon supérieur 20 dans lequel une sortie 21 est pratiquée pour l'extraction de l'eau chaude formée dans la chambre 4. Par la sortie 21 s'échappe également de la vapeur qui fait office de propulseur de l'eau chaude.

La chambre 4 comporte un tube ascendant 5 d'évacuation de l'eau chauffée dont l'extrémité supérieure est alignée avec la sortie 21 et est solidaire du bouchon supérieur 20 formant le plafond de la chambre 4. L'extrémité supérieure du tube ascendant 5 comporte une ouverture 6 établissant une communication entre l'intérieur du tube ascendant 5 et la chambre 4. L'extrémité inférieure du tube ascendant 5 est disposée à proximité du bouchon inférieur 10.

La chambre 4 est alimentée en eau par gravité depuis un réservoir 7 par l'intermédiaire d'une canalisation 8. Pour ce faire, le niveau bas du réservoir 7 est situé au dessus des moyens de chauffe 30 de la chambre 4.

Les entrées 11, 12 pratiquées dans le bouchon inférieur 10 comportent chacune un clapet anti-retour 13, 14 à bille destiné à empêcher un retour de l'eau chaude dans le réservoir 7.

La sortie 21 pratiquée dans le bouchon supérieur 20 comporte également un clapet anti retour 22 à bille pour favoriser le remplissage de la chambre 4.

La sortie 21 est prolongée par un conduit 41 disposé verticalement. L'extrémité supérieure du conduit 41 se divise en un conduit incliné 42 reliant le conduit 41 et le réservoir 7 et un conduit d'évacuation 43 disposé verticalement dans l'axe du conduit 41. Le conduit d'évacuation 43 débouche dans une chambre de séparation 45 de l'eau chaude et de la vapeur.

La chambre de séparation 45 comporte un plafond 46 de forme arrondie, une paroi interne 47 verticale, une paroi externe 57 et un fond incliné 48. Le conduit d'évacuation 43 est agencé près de la paroi 47 verticale et débouche à proximité du plafond 46. Le fond incliné 48 comporte une sortie de distribution d'eau chaude 40. La chambre de séparation 45 comporte à la jonction de la paroi interne 47 verticale et du plafond 46 un orifice 60 reliant la partie supérieure de la chambre de séparation 45 à un espace annulaire formant un conduit d'évacuation de vapeur 49. L'orifice 60 est disposé horizontalement pour former une chicane et ne permettre que le passage de la vapeur. Le plafond 46, la paroi interne 47, la paroi externe 57 et le fond incliné 48 sont réalisés en matière plastique et présentent une épaisseur d'environ un millimètre.

Le bouchon supérieur 20 comporte une excroissance 23 s'étendant vers l'extérieur de la chambre 4 permettant d'accroître le volume d'eau chauffée à chaque cycle de chauffe.

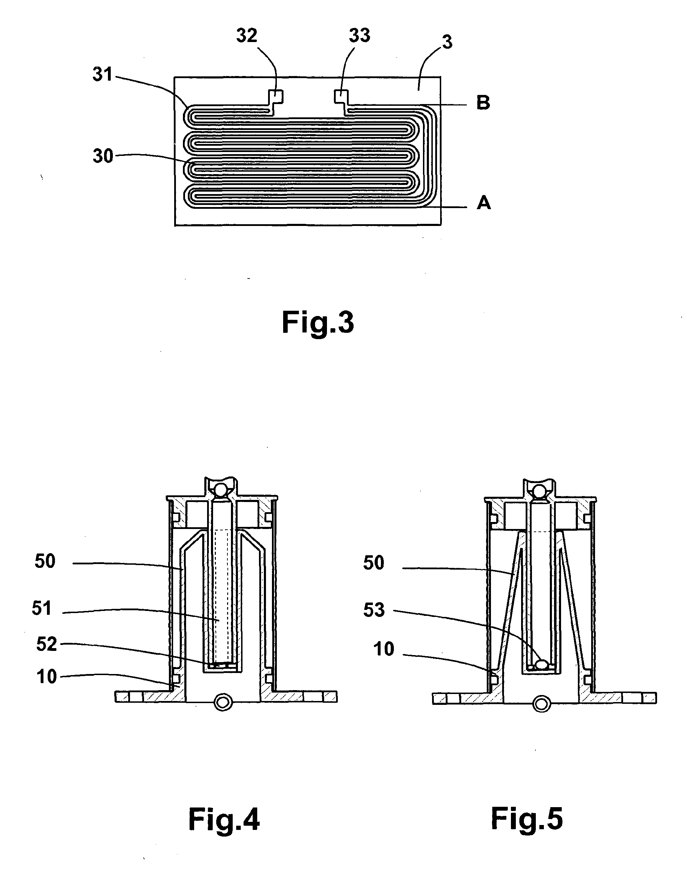

Dans une variante de réalisation illustrée à la figure 4, le bouchon supérieur ne comporte pas d'excroissance et le bouchon inférieur 10 comporte une excroissance 50 s'étendant vers l'intérieur de la chambre et permettant de limiter le volume de la chambre. L'excroissance 50 a une forme annulaire et est agencée autour du tube ascendant. L'excroissance comporte une fente verticale 51 qui forme dans sa partie basse une ouverture 52 reliant la chambre avec l'extrémité inférieure du tube ascendant.

Dans une variante de réalisation illustrée à la figure 5, le bouchon supérieur ne comporte pas d'excroissance et le bouchon inférieur 10 comporte une excroissance 50 s'étendant vers l'intérieur de la chambre et permettant de limiter le volume de la chambre. L'excroissance 50 a une forme conique et est agencée autour du tube ascendant. L'excroissance comporte dans sa partie basse au moins un canal 53 reliant la chambre avec l'extrémité inférieure du tube ascendant. L'entrée du canal 53 est disposée à proximité de la paroi verticale de la chambre. Lors de l'expulsion, l'eau est forcée de passer sur la paroi verticale chauffée.

La figure 3 représente le corps 3 cylindrique développé à plat avec les moyens de chauffe 30. La résistance électrique sérigraphiée 31 est réalisée sous la forme de deux pistes sérigraphiées qui s'étendent sur la hauteur de la paroi verticale du corps 3 cylindrique. Les pistes sérigraphiées sont disposées sur un support électriquement isolant, par exemple une couche de matériau émaillé. Les pistes sérigraphiées présentent des plots de connexion 32, 33 à des moyens de commande (non représentés sur les figures).

La chaudière 2 comporte des moyens de régulation thermique du type thermostat qui coupent l'alimentation électrique lorsque la température du corps 3 dépasse une température de consigne et des moyens de sécurité thermique du type fusible qui coupent l'alimentation électrique en cas de surchauffe anormale (non représentés sur les figures).

En fonctionnement, l'utilisateur remplit le réservoir 7 avec l'eau nécessaire à sa préparation. L'eau va entrer dans la chambre 4 par les entrées 11, 12 à travers les clapets anti retour 13, 14 à bille. Le niveau de l'eau monte par gravité jusqu'à l'extrémité inférieure du tube ascendant 5. Pour progresser, l'eau va chasser l'air contenu dans la chambre 4 par l'ouverture 6 puis par la sortie 21 pratiquée dans le bouchon supérieur 20 jusqu'à ce que le niveau d'eau dans le réservoir 7 s'équilibre avec le niveau de l'eau dans la chambre 4.

L'utilisateur commande l'alimentation de la résistance électrique sérigraphiée 31 pour fournir une puissance de chauffe de l'ordre de 3000 W. L'eau contenue dans la chambre 4 est portée à ébullition et de la vapeur commence à être générée sur la paroi du corps 3. L'ouverture 6 est dimensionnée pour qu'uniquement une partie de la vapeur produite puisse s'échapper, l'autre partie créant une pression qui pousse l'eau chaude dans le tube ascendant 5. La pression générée par le début de l'ébullition pousse lentement l'eau contenue dans le tube ascendant 5 à travers la sortie 21, le clapet anti retour 22 puis dans le conduit 41. La vitesse de l'eau étant faible, l'eau s'écoule ensuite par gravité dans le conduit incliné 42 vers le réservoir. Lorsque l'ébullition est atteinte, la pression générée par un afflux soudain de vapeur dans la chambre 4 est telle que l'eau résiduelle dans la chambre 4 est propulsée dans le tube ascendant à une vitesse suffisante pour passer dans le conduit d'évacuation 43 vertical puis dans la chambre de séparation 45 de l'eau chaude et de la vapeur. Le diamètre du tube ascendant 5 est déterminé pour que le volume de l'eau contenu dans le tube ascendant 5 s'écoule vers le réservoir 7 au début de l'expulsion.

Le jet d'eau chaude mélangée à de la vapeur, propulsé dans la chambre de séparation 45, est dirigé par le plafond 46 de forme arrondie vers le fond incliné 48. La vapeur va s'échapper par l'orifice 60 et le conduit d'évacuation de vapeur 49. Une partie de l'eau chaude va commencer à s'écouler par la sortie de distribution d'eau chaude 40 par gravité à une vitesse bien inférieure à la vitesse de l'eau expulsée par le conduit d'évacuation 43, faisant que l'autre partie de l'eau chaude s'accumule temporairement dans la partie basse de la chambre de séparation. L'ensemble de l'eau chaude expulsée par le conduit d'évacuation 43 va s'écouler par la sortie de distribution d'eau chaude 40 dans un temps légèrement inférieur au temps d'un cycle de production d'eau chaude.

Après l'expulsion de l'eau chaude de la chambre 4 par le conduit d'évacuation 43, la vapeur résiduelle dans la chambre 4 se condense alors très rapidement sur les parties froides, provoquant une dépression qui ferme le clapet anti retour 22 et aspire l'eau du réservoir 7 dans la chambre 4 à travers les clapets anti retour 13, 14. Le remplissage étant très rapide, la chauffe est maintenue pendant cette phase sans risque de surchauffe de la résistance électrique sérigraphiée 31 pour démarrer ainsi un nouveau cycle de production d'eau chaude. Une fois la quantité d'eau chaude produite atteinte, l'utilisateur coupe l'alimentation électrique de la résistance électrique sérigraphiée 31.

L'invention concerne également un appareil de distribution d'eau chaude du type fontaine comportant la chaudière 2.

L'appareil est destiné à fournir un volume prédéterminé d'eau portée à ébullition formé par la production successive de plusieurs volumes élémentaires correspondant chacun environ au volume de la chambre 4.

A titre d'exemple, l'appareil délivre un volume d'eau chaude à une température supérieure à 90°C, prévu pour être contenu dans une tasse ou un bol d'environ 25 cl disposé sous la sortie de distribution d'eau chaude 40. La chambre 4 a un volume compris entre 7 et 10 cl, la chaudière 2 devra fournir 3 cycles de production d'eau chaude pour remplir la tasse. La résistance électrique sérigraphiée a une puissance comprise entre 2500 et 3000 W sous 240 V et le temps pour réaliser un cycle de production d'eau chaude est inférieur à 10 s. Le temps total pour délivrer une tasse d'eau chaude est donc inférieur à 30 s.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Dans une variante de réalisation, le bouchon inférieur pourra comporter également une excroissance vers l'extérieur de la chambre.

## Revendications

1. Chaudière (2) pour appareil électroménager de préparation de boissons comportant une chambre (4) d'ébullition comportant un fond, une paroi verticale et des moyens de chauffe (30), la surface de la paroi verticale étant supérieure à la surface du fond de la chambre (4) et les moyens de chauffe (30) étant formés par une résistance électrique sérigraphiée (31) rapportée sur ladite paroi verticale, **caractérisée en ce que** la chambre (4) d'ébullition est alimentée en eau par gravité à partir d'un réservoir (7), **en ce que** la chaudière (2) comporte un clapet anti-retour (13, 14) sur l'alimentation en eau et **en ce que** la chambre (4) d'ébullition comporte un plafond traversé par un tube ascendant (5) d'évacuation de l'eau chauffée dont l'extrémité inférieure est disposée à proximité du fond de la chambre (4) d'ébullition, le tube ascendant (5) présentant une ouverture (6) dans la chambre (4) d'ébullition à proximité du plafond de ladite chambre.

2. Chaudière (2) selon la revendication 1, **caractérisée en ce que** la chambre (4) comporte une sortie (21) d'évacuation de l'eau chauffée munie d'au moins un clapet anti retour (22).

3. Chaudière (2) selon l'une quelconque des revendications 1 à 2, **caractérisée en ce que** la résistance électrique sérigraphiée (31) s'étend sur la paroi verticale entre un premier point bas (A) et un deuxième point haut (B) et **en ce que** la chambre (4) comporte des moyens de limitation d'au moins dix pour-cent du volume contenu à l'intérieur de la paroi verticale entre un premier plan horizontal passant par le premier point bas et un deuxième plan horizontal passant par le deuxième point haut.

4. Chaudière (2) selon la revendication 3, **caractérisée en ce que** la chambre (4) comporte un bouchon inférieur (10) et un bouchon supérieur (20), au moins un des dits bouchons étant muni d'une excroissance (50) qui s'étend vers l'intérieur de la chambre, ladite excroissance (50) formant les moyens de limitation du volume.

5. Chaudière (2) selon la revendication 4, **caractérisée en ce que** le bouchon inférieur (10) est muni d'une excroissance (50) de forme conique.

6. Chaudière (2) selon l'une quelconque des revendications 1 à 2, **caractérisée en ce que** la résistance électrique sérigraphiée (31) s'étend sur la paroi verticale entre un premier point bas (A) et un deuxième point haut (B) et **en ce que** la chambre (4) comporte des moyens d'augmentation d'au moins dix pour-cent du volume défini par la paroi verticale entre un premier plan horizontal passant par le premier point bas (A) et un deuxième plan horizontal passant par le deuxième point haut (B).

7. Chaudière (2) selon la revendication 6, **caractérisée en ce que** la chambre (4) comporte un bouchon inférieur (10) et un bouchon supérieur (20), au moins un des dits bouchons étant muni d'une excroissance (23) qui s'étend vers l'extérieur de la chambre, ladite excroissance formant les moyens d'augmentation du volume.

8. Chaudière (2) selon l'une quelconque des revendications 2 à 7, **caractérisée en ce que** la sortie (21) est reliée à des moyens de séparation de l'eau contenue initialement avant ébullition dans le tube ascendant (5) et de l'eau contenue dans la chambre (4).

9. Chaudière (2) selon la revendication 8, **caractérisée en ce que** les moyens de séparation comportent un conduit (41, 43) sensiblement vertical raccordé à la sortie (21) pour évacuer l'eau contenue dans la chambre (4) et un conduit incliné (42) reliant la sortie (21) au réservoir (7) pour évacuer l'eau contenue dans le tube ascendant (5).

10. Chaudière (2) selon l'une quelconque des revendications 1 à 4, **caractérisée en ce que** la sortie (21) est raccordée à une chambre de séparation (45) de l'eau et de la vapeur.

11. Chaudière (2) selon la revendication 10, **caractérisée en ce que** la chambre de séparation (45) comporte au moins partiellement une paroi interne (47) et une paroi externe (57) définissant un volume formant un conduit d'évacuation de vapeur (49).

12. Appareil électroménager comportant une chaudière (2) conforme à l'une des revendications 1 à 11.

13. Appareil électroménager selon la revendication 12, **caractérisé en ce qu'**il est un appareil de distribution d'eau chaude.

## Patentansprüche

1. Boiler (2) für ein elektrisches Haushaltsgerät zur Getränkebereitung, bestehend aus einer Siedekammer (4) mit einem Boden, einer senkrechten Wandung und Heizmitteln (30), wobei die senkrechte Wandung höher liegt als die Bodenfläche der Kammer (4) und die Heizmittel (30) aus einem elektrischen Siebdruckwiderstand (31) bestehen, der an die genannte senkrechte Wandung angebaut ist und **dadurch gekennzeichnet ist, dass** die Siedekammer (4) durch Ausnutzung der Schwerkraft aus einem Vorratsbehälter (7) mit Wasser gespeist wird, dass der Boiler (2) mit einem Rückschlagventil (13, 14) am Wasserzulauf ausgestattet ist und dass die Siedekammer (4) eine Decke hat, die von einem Ablaufsteigrohr (5) für heißes Wasser durchbrochen wird, dessen unteres Ende nahe an der Siedekammer (4) angeordnet ist, wobei das Steigrohr (5) nahe an der Decke dieser Siedekammer eine Öffnung (6) in die Siedekammer (4) aufweist.

2. Boiler (2) nach Anspruch 1, **dadurch gekennzeichnet, dass** die Kammer (4) mit einem Warmwasserablauf (21) mit mindestens einem Rückschlagventil (22) versehen ist.

3. Boiler (2) nach einem der Ansprüche 1 bis 2, **dadurch gekennzeichnet, dass** sich der elektrische Siebdruckwiderstand (31) über die senkrechte Wandung zwischen einem ersten, tief gelegenen Punkt (A) und einem zweiten, hoch gelegenen Punkt (B) erstreckt und dass die Kammer (4) an der Innenseite der senkrechten Wandung zwischen einer ersten horizontalen Ebene, die durch den ersten, tief gelegenen Punkt verläuft, und einer zweiten horizontalen Ebene, die durch den zweiten, hoch gelegenen Punkt verläuft, mit einer Begrenzungseinrichtung von mindestens zehn Prozent des enthaltenen Volumens ausgestattet ist.

4. Boiler (2) nach Anspruch 3, **dadurch gekennzeichnet, dass** die Kammer (4) mit einem unteren Stopfen (10) und einem oberen Stopfen (20) ausgestattet ist, wobei mindestens einer dieser Stopfen mit einer Ausstülpung (50) zum Kammerinneren hin versehen ist und diese Ausstülpung (50) die Volumenbegrenzungseinrichtung bildet.

5. Boiler (2) nach Anspruch 4, **dadurch gekennzeichnet, dass** der Bodenstopfen (10) mit einer konischen Ausstülpung (50) versehen ist.

6. Boiler (2) nach einem der Ansprüche 1 bis 2, **dadurch gekennzeichnet, dass** sich der elektrische Siebdruckwiderstand (31) an der senkrechten Wandung zwischen einem ersten, tief gelegenen Punkt (A) und einem zweiten, hoch gelegenen Punkt (B) erstreckt und dass die Kammer (4) mit einer Volumenvergrößerungseinrichtung von mindestens zehn Prozent versehen ist, begrenzt durch die senkrechte Wandung zwischen einer ersten horizontalen Ebene, die durch den ersten, tief gelegenen Punkt (A) verläuft, und einer zweiten horizontalen Ebene, die durch den zweiten, hoch gelegenen Punkt (B) verläuft.

7. Boiler (2) nach Anspruch 6, **dadurch gekennzeichnet, dass** die Kammer (4) mit einem unteren Stopfen (10) und einem oberen Stopfen (20) ausgestattet ist, wobei mindestens einer dieser Stopfen mit einer Ausstülpung (23) zur Außenseite der Kammer hin versehen ist und diese Ausstülpung die Volumenvergrößerungseinrichtung bildet.

8. Boiler (2) nach einem der Ansprüche 2 bis 7, **dadurch gekennzeichnet, dass** der Ablauf (21) mit einer Trenneinrichtung verbunden ist, die das Wasser, das sich vor dem Sieden ursprünglich im Steigrohr (5) befindet, von dem Wasser in der Kammer (4) trennt.

9. Boiler (2) nach Anspruch 8, **dadurch gekennzeichnet, dass** die Trenneinrichtung einen im Wesentlichen vertikalen Kanal (41, 43), der an den Ablauf (21) angeschlossen ist, um das in der Kammer (4) enthaltene Wasser abzuleiten, und einen geneigten Kanal (42) umfasst, der den Ablauf (21) mit dem Vorratsbehälter (7) verbindet, um das im Steigrohr (5) enthaltene Wasser abzuleiten.

10. Boiler (2) nach einem der Ansprüche 1 bis 4, **dadurch gekennzeichnet, dass** der Ablauf (21) an eine Trennkammer (45) angeschlossen ist, in der Wasser und Dampf voneinander getrennt werden.

11. Boiler (2) nach Anspruch 10, **dadurch gekennzeichnet, dass** die Trennkammer (45) mindestens teilweise mit einer Innenwandung (47) und einer Außenwandung (57) ausgestattet ist, die ein Volumen begrenzt, das einen Dampfableitungskanal (49) bildet.

12. Elektrisches Haushaltsgerät mit einem Boiler (2), der einem der Ansprüche 1 bis 11 entspricht.

13. Elektrisches Haushaltsgerät nach Anspruch 12, **dadurch gekennzeichnet, dass** es sich um eine Warmwasserversorgungseinrichtung handelt.

## Claims

1. Boiler (2) for beverage preparation household electrical appliance comprising a boiling chamber (4) having a bottom, a vertical wall and heating means (30), the area of the vertical wall being greater than the area of the bottom of the chamber (4) and the heating means (30) being formed by a screen-printed electrical element (31) attached to said vertical wall, **characterised in that** the boiling chamber (4) is supplied with water by gravity from a tank (7), **in that** the boiler (2) comprises a non-return valve (13, 14) on the water supply and **in that** the boiling chamber (4) comprises a ceiling crossed by a riser pipe (5) for evacuating heated water, whose lower end is arranged near the bottom of the boiling chamber (4), the riser pipe (5) having an opening (6) in the boiling chamber (4) near the ceiling of said chamber.

2. Boiler (2) according to claim 1, **characterised in that** the chamber (4) comprises an outlet (21) for evacuating heated water equipped with at least one non-return valve (22).

3. Boiler (2) according to claim 1 or 2, **characterised in that** the screen-printed electrical element (31) extends over the vertical wall between a first low point (A) and a second high point (B) and **in that** the chamber (4) comprises means for limiting by at least ten percent the volume contained inside the vertical wall between a first horizontal plane passing through the first low point and a second horizontal plane passing through the second high point.

4. Boiler (2) according to claim 3, **characterised in that** the chamber (4) comprises a lower plug (10) and an upper plug (20), at least one of said plugs being provided with a protuberance (50) extending towards the inside of the chamber, said protuberance (50) forming the means for limiting the volume.

5. Boiler (2) according to claim 4, **characterised in that** the lower plug (10) is provided with a conical protuberance (50).

6. Boiler (2) according to claim 1 or 2, **characterised in that** the screen-printed electrical element (31) extends over the vertical wall between a first low point (A) and a second high point (B) and **in that** the chamber (4) comprises means for increasing by at least ten percent the volume defined by the vertical wall between a first horizontal plane passing through the first low point (A) and a second horizontal plane passing through the second high point (B).

7. Boiler (2) according to claim 6, **characterised in that** the chamber (4) comprises a lower plug (10) and an upper plug (20), at least one of said plugs being provided with a protuberance (23) extending towards the outside of the chamber, said protuberance forming the means for increasing the volume.

8. Boiler (2) according to any of claims 2 to 7, **characterised in that** the outlet (21) is connected to means for separating the water initially contained before boiling in the riser pipe (5) and the water contained in the chamber (4).

9. Boiler (2) according to claim 8, **characterised in that** the separating means comprise a substantially vertical duct (41, 43) connected to the outlet (21) for evacuating the water contained in the chamber (4) and an inclined duct (42) connecting the outlet (21) to the tank (7) for evacuating the water contained in the riser pipe (5).

10. Boiler (2) according to any of claims 1 to 4, **characterised in that** the outlet (21) is connected to a chamber (45) for separating the water and the steam.

11. Boiler (2) according to claim 10, **characterised in that** the separation chamber (45) comprises at least partially an internal wall (47) and an external wall (57) defining a volume forming a steam evacuation duct (49).

12. Household electrical appliance comprising a boiler (2) according to one of claims 1 to 11.

13. Household appliance according to claim 12, **characterised in that** it is an appliance for dispensing hot water.
